# EUROPEAN PATENT SPECIFICATION

(11) **EP 2 299 019 B1**
(45) Date of publication and mention of the grant of the patent: **25.01.2012**
(21) Application number: 10170233.0
(22) Date of filing: 21.07.2010
(51) Int. Cl.: E04B 7/16, H01L 31/048

(54) **Modular cover for industrial building and method for its installation**
Modulare Abdeckung für ein industrielles Gebäude und Verfahren zu deren Installation
Recouvrement modulaire pour un bâtiment industrielle et procédé pour son installation

(30) Priority: 05.08.2009 IT MI20091418
(43) Date of publication of application: 23.03.2011
(73) Proprietor: Cappello Alluminio S.r.l., 97100 Ragusa (IT)
(72) Inventor: Cappello, Giuseppe, 97010 Giarratana (Ragusa) (IT); Cappello, Giorgio, 97010 Giarratana (Ragusa) (IT); Cappello, Giovanni, 97010 Giarratana (Ragusa) (IT)
(74) Representative: Rapisardi, Mariacristina

(56) References cited:
- EP-A1- 0 147 502
- EP-A1- 0 217 978
- EP-A1- 0 334 215
- DE-U1-202006 020 180
- FR-A- 734 488

## Description

The present invention refers to a modular cover for industrial building and to a method for its installation. Such covers are known from EP 0 217 978 A1, FR 734 488 A, DE 20 2006 020180 U1, EP 0 334 215 A1.

It is still today particularly felt the problem of the decontamination of certain covers of industrial buildings having plates in an asbestos-based material or other material harmful to health.

The decontamination of the cover in general is simply limited to eliminating the drawbacks lamented in the original cover.

One aim of the present invention is to realize a modular cover which has diversified functionalities encouraging its adoption both for the substitution of covers of still existing industrial buildings, and for the construction of new industrial buildings.

Another aim of the invention is to realize a modular cover and a method for its installation which can adapted very easily to any existing structure.

The technical task, and also this and other aims, according to the present invention, are reached by realizing a modular cover for industrial building and a method for its installation conforming to the independent claims 1 and 9 reported in the following.

The cover can be applied on existing buildings without having to modify anything of their structure and in particular without having to intervene with stoneworks on what still existing.

The cover is adapted to any structure and to any amplitude of existing span. The cover integrates itself architecturally without protruding from the defined limits for the building.

Thanks to the provision of suitable profiles it is possible to prepare on the ground the modules which are subsequently installed in covering just making simple mechanical assemblies.

The covering modules are mutually approached by means of expansion joints protected by a suitable rubber shock absorber.

In the connection of the parts constituting the module advantageously hinge joints are provided, free to move both for absorbing the thermal expansions and for regulating the inclination of the eventual photovoltaic panel.

The provision of a photovoltaic cover integrated in the architectural limits of the building can advantageously also determine a new energetic classification of the same building.

Other characteristics of the present invention are defined, furthermore, in the subsequent claims.

Further characteristics and advantages of the invention will result more evident from the description of a preferred but not exclusive embodiment of the modular cover according to what was found, illustrated in an indicative and not limitative way in the annexed drawings, in which:
figure 1 shows a front view of a module conforming to a first way of realizing the invention, applied between two covering Y-shaped beams of an industrial building;
figure 2 shows a front view of a module conforming to a second way of realizing the invention, applied between two covering Y-shaped beams of an industrial building;
figure 3 shows the knot of the connection profiles between the first and the second panel of the module of figure 1;
figure 4 shows the knot of the connection profiles between the first and the second panel of the module of figure 2;

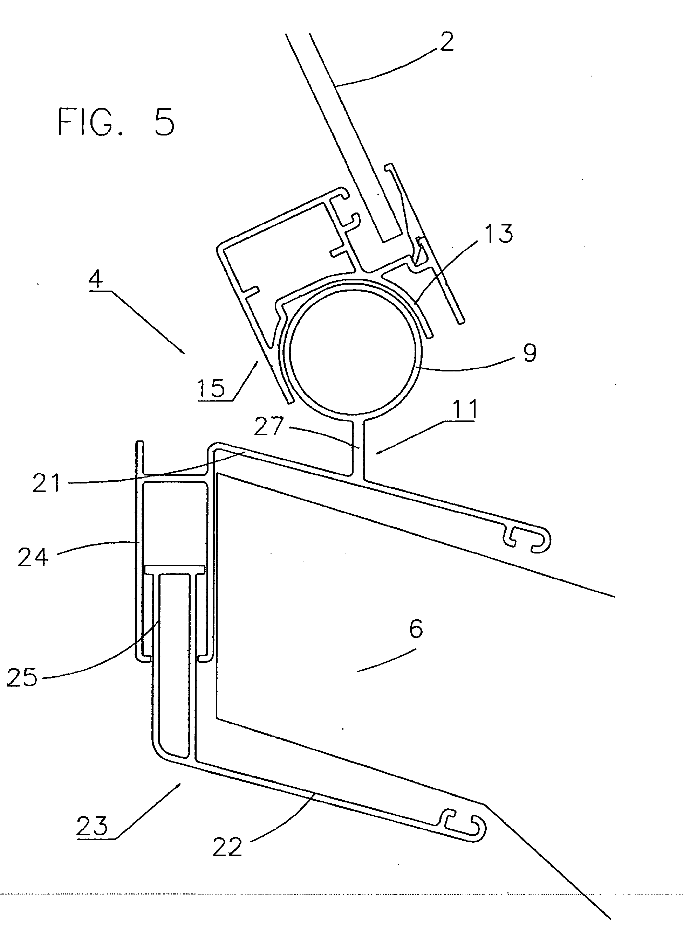

figure 5 shows the knot of the connection profiles between a panel of the module of figure 1 and a covering beam of the building; and

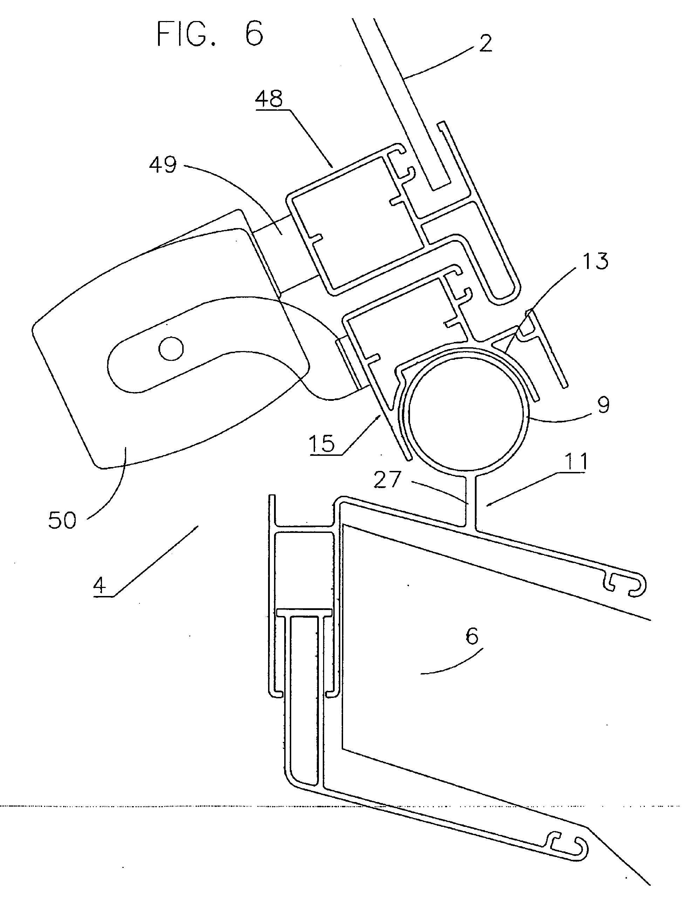

figure 6 shows the knot of the connection profiles between a panel of the module of figure 2 and a covering beam of the building.

Equivalent parts in the following description of the various preferred embodiments of the invention will be indicated the same numeral characters.

With reference to the cited figures, the modular cover of the industrial building comprises one or more modules each comprising a first and a second covering panel 1 and 2 forming an angle one with respect to the other, a first and respectively a second group of profiles 3 and 4 of connection of the first and respectively the second panel 1 and 2 to a first and respectively a second cover beam 5 and 6 of the building, and a third group of profiles 7 of interconnection between the first and second panel 1 and 2.

The modular cover is made by a plurality of modules of the type described before, mutually approached by means of expansion joints (not shown) protected by suitable rubber shock absorber.

Preferably at least one between the first and the second panel 1 and 2, for example the first one, is a photovoltaic panel.

Naturally the photovoltaic panels of the various modules have an orientation and a serial connection suitable to optimize the production of electric energy. Preferably the inclination of the photovoltaic panels is realized at approx. 15° with respect to a horizontal plane. The possibility of regulation is anyhow still comprised at least between 0 and 30° with respect to a horizontal plane.

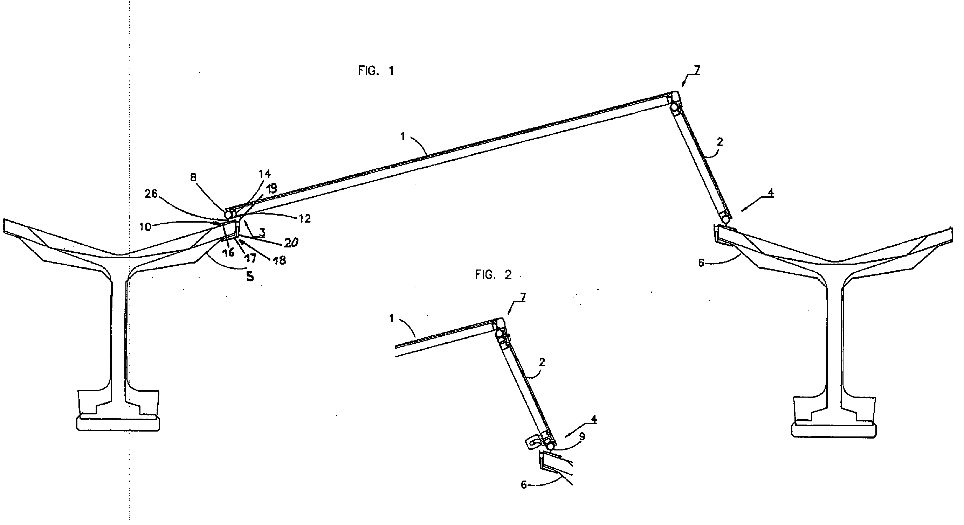

Advantageously one between the first and second panel 1 and 2 can be a platform scale for aeration, as illustrated in figure 2.

The first and respectively second group of profiles 3 and 4 are provided with vice connection means with the first and respectively second beam 5 and 6 and with hinge connection means with the first and respectively second panel 1 and 2.

The hinge connection means of the first group of profiles 3 with the first panel 1 comprise a cylindrical portion 8 of a profile 10 housed in a portion 12 of conjugated shape of another profile 14.

In the same manner the hinge connection means o the second group of profiles 4 with the second panel 2 comprise a cylindrical portion 9 of a profile 11 housed in a portion 13 of conjugated shape of another profile 15.

The vice connection means of the first group of profiles 3 with the first beam 5 comprise a first and respectively a second clamping wing 16 and 17 present in a first and respectively in a second profile 10 and 18 having portions 19 and 20 mutually coupled in a slideable way along an intersection piece controllable in order to modify the distance between the first and second clamping wing 16 and 17.

Advantageously the cylindrical portion 8 and the clamping wing 16 are realized on the same profile 10 which presents also a pedicle 26 for their mutual spacing.

The vice connection means of the second group of profiles 4 with the second beam 6 comprise a first and respectively a second clamping wing 21 and 22 present in a first and respectively in a second profile 11 and 23 having portions 24 and 25 mutually coupled in a slideable way along an intersection piece which can be controlled in order to modify the distance between the first and second clamping wing 21 and 22.

Advantageously the cylindrical portion 9 and the clamping wing 21 are realized on the same profile 11 which presents also a pedicle 27 for their mutual spacing.

The third group of profiles 7 is provided with hinge connection means between the first and second panel 1 and 2.

The hinge connection means between the first and second panel 1 and 2 comprise once again a cylindrical portion 28 of a profile 29 housed in a portion 30 of conjugated shape of another profile 31.

The profile 29 in which the cylindrical portion 28 is present has a wing 32 overlapping the profile 31 which has the portion of conjugated shape 30 (or vice versa).

The overlapping wing 32 is profiled in order to assure the overlapping by varying the rotation angle between the cylindrical portion 28 and the portion 3 0 of conjugated shape.

The overlapping wing 32 serves therefore to create an efficient barrier to the infiltration of rain water through the cover.

The profile 29 comprises a polygonal chamber 33 from which externally a wing 34 departs which with one side 35 of the chamber 33 and a stop 36 fastened to the wing 34 delimits an engagement seat 37 for the panel 1. The overlapping wing 32 has a first plane portion 38 which extends orthogonally with respect to the wing 34 and a second plane portion 39 which extends form the first plane portion 38 with an angle of 90°. The cylindrical portion 28 extends from the outside of a side 40 of the chamber 33 parallel and facing the side 35.

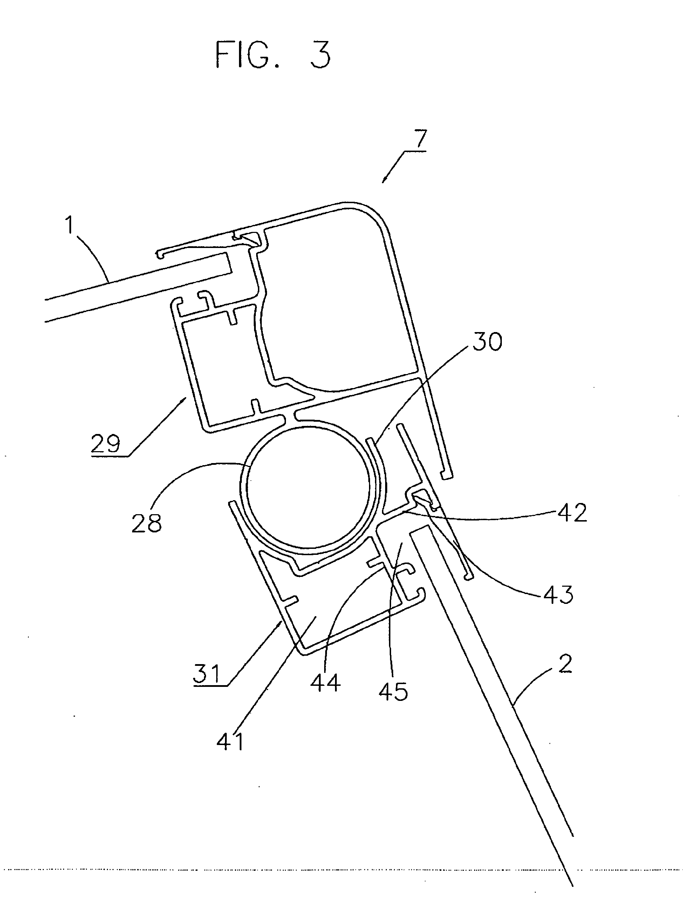

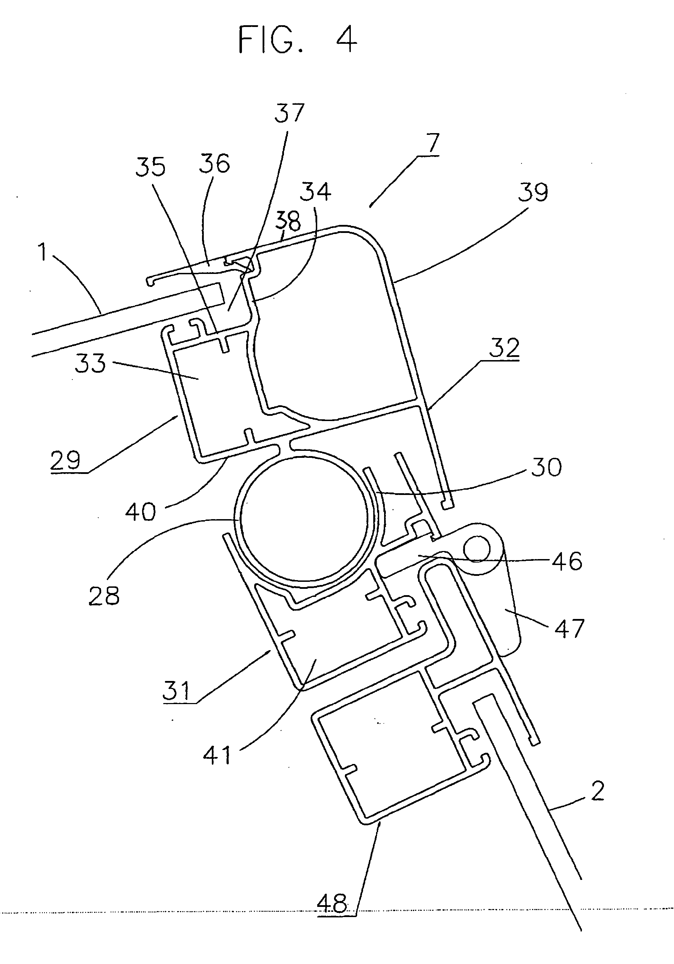

The profile 31 comprises a polygonal chamber 41 one side profiled of which makes the portion 30. From the outside of the portion 30 extends a wing 42 which in the realization of figure 3, together with a stop 43 fastened upon it and to one side 44 of the chamber 41, delimits an engagement seat 45 of the panel 2, whereas in the realization of figure 4 it makes a fastening base of an arm 46 of a hinge the other arm 47 of which is fastened to a profile 48 of a counter-frame for supporting the panel 2.

With reference to the module of figure 2, the provision of the platform scale for the motorized aeration requires that the panel 2 have an additional counter-frame for the support of the platform scale. With respect to the realization of the module of figure 1 therefore in the module of the realization of figure 2 additional profiles 48 of the counter-frame are present, one of which is hinged as seen to the profile 31 and the other is associated to a push rod 49 actuatable by a motor 50 carried by the profile 15.

The procedure for the laying of the modular photovoltaic cover onto the beams covering the industrial building consists in creating the modules, in fixing to the covering beams the vice profiles, and in connecting each module with hinged engagement in the vice profiles, by approaching mutually the modules by means of the expansion joints.

The cover of the invention permits as said the construction of the modules on the ground and they subsequent laying by means of simple mechanical fittings.

In the case of decontamination of the cover of a building, the cover of the invention is completely integrated in the architectural limits of the building without any needs of intervening with stoneworks on the building itself.

The modular cover so conceived is susceptible of numerous modifications and variations, all coming within the range of the inventive concept; furthermore all details can be substituted with technically equivalent elements.

In practice all used materials, and also the dimensions, can be of any kind according to the needs and the state of the art.

## Claims

1. A modular cover for industrial building, comprising one or more modules each comprising a first and a second covering panel (1, 2) forming an angle one with respect to the other, a first and respectively a second group of connection profiles (3, 4) of said first and respectively second panel (1, 2) to a first and respectively a second covering beam (5, 6) of said building, a third group of connection profiles (7) between said first and second panel (1, 2), said first and respectively second group of profiles (3, 4) being provided with vice connection means with said first and respectively second beam (5, 6) and with hinge connection means with said and respectively second panel (1, 2), said third group of profiles (7) being provided with hinge connection means between said first and second panel (1, 2),
**characterized in that** it has a plurality of said modules mutually approached by means of expansion joints protected by a suitable rubber shock absorber.

2. The modular cover for industrial building according to claim 1, **characterized in that** at least one between said first and second panel (1, 2) is a photovoltaic panel.

3. The modular cover for industrial building according to one of the preceding claims, **characterized in that** said hinge connection means comprise a cylindrical portion (8, 9, 28) of a profile (10, 11, 29) housed in a portion of conjugated shape (12, 13, 30) of another profile (14, 15, 31).

4. The modular cover for industrial building according to the preceding claim, **characterized in that** a profile (29) in which said cylindrical portion (28) is present, has a overlapping wing (32) to a profile (31) which has said portion (30) of conjugated shape or vice versa, said overlapping wing (32) being so shaped that it assures the overlapping by varying the rotation angle between said cylindrical portion (28) and said portion (30) of conjugated shape.

5. The modular cover for industrial building according to one of the preceding claims, **characterized in that** said vice connection means comprise a first (16, 21) and respectively a second (17, 22) clamping wing present in a first (10, 11) and respectively second (18, 23) profile having portions (19 and 20, 24 and 25) mutually coupled in a slideable way along a controllable intersection piece in order to modify the distance between said first (16, 21) and second (17, 22) clamping wing.

6. The modular cover for industrial building according to one of the preceding claims, **characterized in that** said cylindrical portion (8, 9) and one between said first (16, 21) and second (17, 22) clamping wing are parts of a same profile (10, 11).

7. The modular cover for industrial building according to one of the preceding claims, **characterized in that** one between said first (1) and second (2) panel is an aeration platform scale.

8. An industrial building **characterized in that** it has a cover with photovoltaic panels according to one of the preceding claims.

9. A procedure for the laying of a modular photovoltaic cover onto covering beams (5, 6) of an industrial building, **characterized in that** is consists in the previous mounting of modules comprising two panels (1, 2) at least one of which being photovoltaic associated by forming an angle with a hinge connection, by fixing of profiles (10 and 18, 11 and 23) with a vice connection to said covering beams (5, 6), by connecting said modules with a hinge connection to said profiles (10 and 18, 11 and 23) by approaching mutually said modules by means of expansion joints.

## Patentansprüche

1. Modulare Abdeckung für ein industrielles Gebäude, umfassend ein oder mehrere Module, von denen jedes eine erste und eine zweite Abdeckplatte (1, 2) umfasst, die relativ zueinander einen Winkel bilden, eine erste und jeweils eine zweite Gruppe von Profilen (3, 4) zur Verbindung der ersten und jeweils zweiten Platte (1, 2) mit einem ersten und jeweils zweiten Abdeckbalken (5, 6) des Gebäudes, eine dritte Gruppe von Verbindungsprofilen (7) zwischen der ersten und zweiten Platte (1, 2), wobei die erste und jeweils zweite Gruppe von Profilen (3, 4) mit Mitteln zur Schraubstockverbindung mit dem ersten und jeweils zweiten Balken (5, 6) und mit Mitteln zur Scharnierverbindung mit der ersten und jeweils zweiten Platte (1, 2) ausgestattet ist, wobei die dritte Gruppe von Profilen (7) mit Mitteln zur Scharnierverbindung zwischen der ersten und zweiten Platte (1, 2) ausgestattet ist,
**dadurch gekennzeichnet, dass** sie eine Vielzahl der Module aufweist, die mithilfe von Dehnungsfugen gegenseitig angenähert werden, die von einem geeigneten Gummistoßdämpfer geschützt werden.

2. Modulare Abdeckung für ein industrielles Gebäude nach Anspruch 1, **dadurch gekennzeichnet, dass** mindestens eine der ersten und zweiten Platte (1, 2) eine Photovoltaikplatte ist.

3. Modulare Abdeckung für ein industrielles Gebäude nach einem der vorangehenden Ansprüche, **dadurch gekennzeichnet, dass** die Scharnierverbindungsmittel einen zylindrischen Abschnitt (8, 9, 28) eines Profils (10, 11, 29) umfassen, der in einem Abschnitt von korrespondierender Form (12, 13, 30) eines anderen Profils (14, 15, 31) aufgenommen ist.

4. Modulare Abdeckung für ein industrielles Gebäude nach dem vorangehenden Anspruch, **dadurch gekennzeichnet, dass** ein Profil (29), in dem der zylindrische Abschnitt (28) vorhanden ist, einen Flügel (32) aufweist, der zu einem Profil (31) überlappt, das den Abschnitt (30) korrespondierender Form aufweist oder umgekehrt, wobei der überlappende Flügel (32) so geformt ist, dass er das Überlappen durch Variieren des Rotationswinkels zwischen dem zylindrischen Abschnitt (28) und dem Abschnitt (30) von korrespondierender Form sicherstellt.

5. Modulare Abdeckung für ein industrielles Gebäude nach einem der vorangehenden Ansprüche, **dadurch gekennzeichnet, dass** die Schraubstockverbindungsmittel einen ersten (16, 21) und jeweils zweiten (17, 22) Klammerflügel umfassen, der in einem ersten (10, 11) und jeweils zweiten (18, 23) Profil vorhanden ist, das Abschnitte (19 und 20, 24 und 25) aufweist, die miteinander verschiebbar entlang eines steuerbaren Kreuzungsstücks verkoppelt sind, um den Abstand zwischen dem ersten (16, 21) und zweiten (17, 22) Klammerflügel zu verändern.

6. Modulare Abdeckung für ein industrielles Gebäude nach einem der vorangehenden Ansprüche, **dadurch gekennzeichnet, dass** der zylindrische Abschnitt (8, 9) und einer des ersten (16, 21) und zweiten (17, 22) Klammerflügels Teil desselben Profils (10, 11) sind.

7. Modulare Abdeckung für ein industrielles Gebäude nach einem der vorangehenden Ansprüche, **dadurch gekennzeichnet, dass** eine der ersten (1) und zweiten (2) Platte eine Plattformwaage zur Belüftung ist.

8. Industrielles Gebäude, **dadurch gekennzeichnet, dass** es eine Abdeckung mit Photovoltaikplatten nach einem der vorangehenden Ansprüche aufweist.

9. Verfahren zum Auflegen einer modularen Photovoltaikabdeckung auf Abdeckbalken (5, 6) eines industriellen Gebäudes, **dadurch gekennzeichnet, dass** es aus dem vorherigen Montieren von Modulen besteht, die zwei Platten (1, 2) umfassen, von denen mindestens eine photovoltaisch ist, die durch Bildung eines Winkels mit einer Scharnierverbindung, durch Fixieren von Profilen (10 und 18, 11 und 23) mit einer Schraubstockverbindung an den Abdeckbalken (5, 6), durch Verbinden der Module mit einer Scharnierverbindung mit den Profilen (10 und 18, 11 und 23) durch gegenseitiges Annähern der Module mithilfe von Dehnungsfugen angeschlossen wird.

## Revendications

1. Recouvrement modulaire pour un bâtiment industriel, comprenant un ou plusieurs modules présentant chacun un premier et un second panneaux de recouvrement (1, 2) formant un angle l'un avec l'autre, un premier et respectivement un second groupes de profils de raccordement (3, 4) desdits premier et respectivement second panneaux (1, 2) à une première et respectivement à une seconde poutres faîtières (5, 6) dudit bâtiment, un troisième groupe de profils de raccordement (7) entre lesdits premier et second panneaux (1, 2), lesdits premier et respectivement second groupes de profils (3, 4) étant munis de moyens de raccordement par mâchoire avec lesdites première et
respectivement seconde poutres (5, 6) et de moyens de raccordement par charnière avec ledit premier et respectivement second panneau (1, 2), ledit troisième groupe de profils (7) étant muni de moyens de raccordement par charnière entre lesdits premier et second panneaux (1, 2),
**caractérisé en ce qu'**il a une pluralité desdits modules réciproquement rapprochés par des joints de dilatation protégés par un amortisseur en caoutchouc prévu à cet effet.

2. Recouvrement modulaire pour un bâtiment industriel selon la revendication 1, **caractérisé en ce qu'**au moins l'un desdits premier et second panneaux (1, 2) est un panneau photovoltaïque.

3. Recouvrement modulaire pour un bâtiment industriel selon l'une des revendications précédentes, **caractérisé en ce que** lesdits moyens de raccordement par charnière comprennent une partie cylindrique (8, 9, 28) d'un profil (10, 11, 29), logée dans une partie de forme conjuguée (12, 13, 30) d'un autre profil (14, 15, 31).

4. Recouvrement modulaire pour un bâtiment industriel selon la revendication précédente, **caractérisé en ce qu'**un profil (29) dans lequel ladite partie cylindrique (28) est présente, a une ailette de chevauchement (32) sur un profil (31) qui présente ladite partie (30) de forme conjuguée ou vice versa, ladite ailette de chevauchement (32) ayant une forme telle qu'elle assure le chevauchement par variation de l'angle de rotation entre ladite partie cylindrique (28) et ladite partie (30) de forme conjuguée.

5. Recouvrement modulaire pour un bâtiment industriel selon l'une des revendications précédentes, **caractérisé en ce que** lesdits moyens de raccordement par mâchoire comprennent une première (16, 21) et respectivement une seconde (17, 22) ailettes de serrage se trouvant dans un premier (10, 11) et respectivement un second (18, 23) profils ayant des parties (19 et 20, 24 et 25) réciproquement accouplées d'une façon coulissante le long d'une pièce d'intersection contrôlable, afin de modifier la distance entre lesdites première (16, 21) et seconde (17, 22) ailettes de serrage.

6. Recouvrement modulaire pour un bâtiment industriel selon l'une des revendications précédentes, **caractérisé en ce que** ladite partie cylindrique (8, 9) et l'une desdites première (16, 21) et seconde (17, 22) ailettes de serrage fait partie d'un même profil (10, 11).

7. Recouvrement modulaire pour un bâtiment industriel selon l'une des revendications précédentes, **caractérisé en ce que** l'un desdits premier (1) et second (2) panneaux est une bascule d'aération.

8. Bâtiment industriel **caractérisé en ce qu'**il présente un recouvrement avec des panneaux photovoltaïques selon l'une des revendications précédentes.

9. Procédé pour la pose d'un recouvrement photovoltaïque modulaire sur des poutres faîtières (5, 6) d'un bâtiment industriel, **caractérisé en ce qu'**il consiste à monter au préalable des modules comprenant deux panneaux (1, 2), dont au moins l'un des deux est photovoltaïque, associés en formant un angle avec un raccordement par charnière, en fixant des profils (10 et 18, 11 et 23) avec un raccordement par mâchoire auxdites poutres faîtières (5, 6), en raccordant lesdits modules avec un raccordement par charnière auxdits profils (10 et 18, 11 et 23), en rapprochant réciproquement lesdits modules par des joints de dilatation.
